# EUROPEAN PATENT SPECIFICATION

(11) **EP 3 491 925 B1**
(45) Date of publication and mention of the grant of the patent: **04.11.2020**
(21) Application number: 18209743.6
(22) Date of filing: 03.12.2018
(51) Int. Cl.: A21D 2/36, A21D 10/00, A21D 13/04, A21D 13/062, A21D 13/066, A21D 13/047

(54) **LONG LIFE PASTRY FOR SPECIFIC NUTRITIONAL PURPOSES AND METHOD OF ITS PRODUCTION**
LANGLEBIGES GEBÄCK FÜR SPEZIFISCHE ERNÄHRUNGSZWECKE UND VERFAHREN ZU DESSEN HERSTELLUNG
PÂTISSERIE LONGUE DURÉE À DES FINS NUTRITIONNELLES SPÉCIFIQUES ET SON PROCÉDÉ DE PRODUCTION

(30) Priority: 04.12.2017 SK 1252017
(43) Date of publication of application: 05.06.2019
(73) Proprietor: Slovenská pol'nohospodárska univerzita v Nitre, 949 76 Nitra (SK)
(72) Inventor: Bojnanská, Tatiana, 949 01 Nitra (SK); Tokár, Marián, 059 52 Vel'ká Lomnica (SK); Vietoris, Vladimír, 949 01 Nitra (SK); Ivanisová, Eva, 941 10 Jatov (SK); Vozárová, Vlasta, 949 01 Nitra (SK)
(74) Representative: Litváková a spol., s.r.o.

(56) References cited:
- EP-A2- 2 001 310
- WO-A1-2007/137578
- CN-A- 107 242 266
- ALIYE ERGIN AND EMINE NUR HERKEN: "Use of various flours in gluten-free biscuits", JOURNAL OF FOOD, AGRIGULTURE & ENVIRONMENT, vol. 10, no. 1, January 2012 (2012-01), XP9512220,
- I. A. Hegazy ET AL: "Production of Egyptian Gluten-Free Bread", World Journal of Dairy & Food Sciences, 1 January 2009 (2009-01-01), pages 123-128, XP055574703, https://www.researchgate.net/publication/2 37767291_Production_of_Egyptian_Gluten-Fre e_Bread Retrieved from the Internet: URL:https://www.researchgate.net/publicati on/237767291_Production_of_Egyptian_Gluten -Free_Bread [retrieved on 2019-03-27]
- DATABASE GNPD [Online] MINTEL; 29 November 2017 (2017-11-29), anonymous: "Chocolate Biscuits with Seeds", XP055574400, retrieved from www.gnpd.com Database accession no. 5280947

## Description

### Technical Field

The invention belongs to the field of food technology, specifically referring to long life pastry for specific nutritional purposes that meets specific nutritional requirements for categories of people with impaired digestive processes or metabolism, and method of producing thereof.

### Background Art

Currently, a great variety of bakery products are marketed, from traditional consumer bread types made from traditional raw materials, to specific bakery products containing various protective components, which increase their nutritional value and are a source of biologically active substances, alternatively have composition that suits consumers with specific nutritional requirements. However, many of these products are not received positively by consumers, because their sensory qualities do not comply with standard requirements the consumers are used to. They are often not satisfactory in terms of taste, aroma and consistency, can have shorter shelf life, are not sufficiently tender and delicate, they may crumble.

Celiac disease is chronic inflammatory autoimmune disease of gastrointestinal tract caused by intolerance to certain prolamin protein fractions, mostly affecting mucosa of proximal parts of small intestine, which belongs to diseases requiring consumption of food with specific composition. In recent years, prevalence of celiac disease has increased worldwide. The only effective treatment of celiac disease is gluten-free diet (diet free of celiac active protein components of certain cereal crops). Resolution of clinical symptoms and reduction of incidence of serious complications of the disease in substantial group of patients can be achieved by early diagnosis and immediate introduction of gluten-free diet.

Wide product range of long life pastry/cookies intended for celiac patients is available on the market, manufactured by several producers from Slovakia, Czech Republic, and other countries (e.g. DruidCZ, Novalim, Schär, Agluten, Glutaline, Celi Hope, etc.). Natural gluten-free raw materials as well as raw materials with removed gluten, or combination thereof, are used for their production.

Other kinds of food products for celiac patients are available too, typically based on a grain product raw material (flour, farina, etc.). For example, patent SK 278351 describes method of production of gluten-free pasta for patients suffering from celiac disease, that is made from starch and water by stirring 7 to 10 minutes at 80 °C to 90 °C in a duplicator, with other nutritionally rich raw materials, such as soya flour, eggs, protein concentrate, and dried milk, admixed into the base dough.

Other kinds of intolerance are often associated with celiac disease, such as lactose intolerance, alternatively other metabolic disorders, mainly diabetes mellitus. In lactose intolerance, it is necessary to exclude milk and dairy products containing lactose from diet; in diabetes mellitus it is necessary to follow a diet based on controlled or decreased intake of saccharides.

Patients with celiac disease must exclude from their diet all wheat products (including wheat kamut, durum, spelt, and other wheats), rye, barley, triticale, alternatively even oats. For majority of patients, dietary measures lead to normalization of clinical, laboratory as well as enterobioptic findings achieved after variable periods of time from establishment of gluten-free diet. Such diet is lifelong and choosing suitable gluten-free foods is an everyday task for celiac patients. Concerning the requirements of gluten-free diet, increasing attention has been paid to the usage of so-called pseudocereals (buckwheat, amaranth, quinoa, millet, sorghum), mainly for their low content of prolamin fraction in proteins and, on the contrary, high content of nutritionally valuable proteins, fats, minerals, fibre and starch. Production of gluten-free food products, especially pastry, is usually based on different kinds of starches and flours from plant seeds that do not contain gluten, which makes this food the main source of energy and minor source of fibre and other nutritionally valuable components.

Double combinations for celiac patients with lactose intolerance, alternatively for celiac patients with diabetes, are currently marketed.

Serbian patent document RS20090143 describes rice and buckwheat gluten-free bread without additives, enriched with natural antioxidants, which is primarily intended for nutrition of persons with celiac disease. With regard to its specific rutin content, it is also suitable for people suffering from cardiovascular diseases and with respect to its overall nutritional value, it is also intended for healthy population, to prevent the aforementioned metabolic disorders. The bakery product is made of rice and buckwheat flour (in varying ratios), vegetable fat, yeast, sugar, salt, and water.

Serbian patent document RS20100132 describes gluten-free cookies based on rice and buckwheat flour, which are primarily intended for nutrition of celiac patients but considering the specific content of rutin and quercetin, they are suitable and recommended for consumption by people with cardiovascular disorders. The cookies consist of rice flour and white buckwheat flour, vegetable fat, powdered sugar, honey, raising agent (sodium bicarbonate), emulsifier (monoglyceride ester of diacetyltartaric acid), hydrocolloid (carboxymethyl cellulose), and salt.

Application of invention in the Russian Federation RU2601798 describes a method of production of bakery products with high nutritional and biological value intended for functional nutrition. It describes the method of production of the bakery product including making of dough by mixing of salt water with flour, introduction of plant ingredient prior to mixing with flour at 29 to 32 °C. The dough is kneaded at liquid dispersed phase prepared by mixing sugar solution, whey, water, yeast and stirring for 2 minutes with another addition of wheat flour in the amount of 20 to 30 % of total weight of the flour used for dough. The dough is further stirred for 2 minutes, dispersed by recirculation through a pump for 5 to 8 minutes until a homogeneous suspension is obtained, followed by fermentation of the liquid dispersed phase for 20 to 40 minutes, wherein the used plant ingredient is represented by pressed pumpkin. It is obtained from pumpkin seeds processed at 50 to 80 °C on twin screw extruder in the amount of 1.0 to 5.0 % (w/w) of wheat flour used for the dough. The invention provides for increased nutritional value, specific volume, stability of shape, porosity as well as improved taste qualities of the bakery product.

The document "Use of various flours in gluten-free biscuits", ALIYE ERGIN AND EMINE NUR HERKEN, published in JOURNAL OF FOOD, AGRICULTURE & ENVIRONMENT, vol. 10, no. 1, January 2012, discloses gluten-free biscuits comprising 35 % rice flour, 35 % corn starch, 10 % each of potato flour and chickpea flour in combination with sugar, salt, baking powder, guar gum, and shortening.

Patent document CN 107 242 266 A describes a nutritious cereal biscuit comprising approximately 20 % corn, 11 % oat flour, 11 % millet flour, 11 % buckwheat flour, 11 % cassava powder, 16 % cream, 13 % sugar, 3 % oil, and about 0,6 % emulsifier.

Patent document EP 2 001 310 A2 discloses gluten-free biscuits comprising 30-50 % maize starch, 20-40 % rice flour, 1,25-5 % linseed and sunflower seed flour, 7-12 % sugar, 2-5 % emulsifier, 6-16 % oil, 1-3 % whole milk powder as well as various other ingredients.

Patent document WO 2007/137578 A1 discloses gluten free bread made from composite flour comprising 38 % buckwheat kernels, and 15 % each of rice flour, maize flour, sesame flour and linseed flour. The flour is mixed with yeast, eggs and psyllium and baked into bread.

The document "Production of Egyptian Gluten-Free Bread", I. A. Hegazy et al., published in World Journal of Dairy & Food Sciences, 1 January 2009, discloses gluten-free bread prepared from a composite flour comprising 50 % rice flour, 40 % corn starch, 5 % soy flour and 5 % chickpea flour (based on amounts in flour), which were mixed with 2 % compressed yeast and 1 % salt.

The document "Chocolate Biscuits with Seeds", published in DATABASE GNPD (Online) MINTEL, 29 November 2017, discloses gluten free chocolate biscuits with seeds comprising rice flour, 13.6 % chocolate chips, palm oil, cornstarch, corn flour, glucose syrup, cane sugar, buckwheat flour, 4.9 % sunflower seeds, rice protein, 3.4 % millet seeds, honey, cocoa powder, flavouring, sea salt, emulsifier and raising agent.

However, the aforementioned documents do not solve the problem of unavailability of long life pastry for celiac patients suffering also of lactose intolerance and diabetes.

Large numbers of recipes are available from web portals dedicated to healthy nutrition that are intended for preparation of gluten-free, lactose-free pastry without sugar, which are, unfavourably, only intended for immediate consumption and not usable for industrial manufacturing of long life pastry.

To date, no long life bakery product is known on the market that meet the combined requirements of people suffering all of the abovementioned digestive disorders, i.e. long life pastry suitable for celiac patients with lactose intolerance combined with diabetes.

The aim of this invention is to propose an optimal combination of raw materials while preserving sensory acceptability of final product and optimal technological parameters, which are shelf life, aromatic and taste qualities. Raw materials for preparation of long life pastry for specific nutritional purposes must ensure required energy value of food as well as supply of biologically significant components such as fibre, proteins, and minerals, alternatively substances with antioxidant potential. The aim of the present invention is to provide long life pastry and method of producing thereof that meet criteria for foods suitable for celiac patients, alternatively for celiac patients with lactose intolerance, alternatively with diabetes, or for individuals suffering from all the described disorders simultaneously or only one of them, which would cover wider group of people.

### Summary of the Invention

Long life pastry for specific nutritional purposes according to this invention, based on the dough for preparation thereof is made from a mixture consisting of composite flour in the amount of 56 to 60 % (w/w), edible fat and/or emulsified fat in the amount of 20 to 27 % (w/w), sweetener suitable for diabetic patients in the amount of 0.8 to 12 % (w/w), milk substitute produced from plant raw materials in the amount of 3 to 7 % (w/w), flavouring and seasoning ingredients in the amount of 0.001 to 3 % (w/w), oilseeds in the amount of 1 to 3 % (w/w), lecithin in the amount of 0.5 to 0.7 % (w/w), and water in amounts dependent on binding capacities of the composite flour and other components of the mixture. The sweeteners suitable for diabetic patients are sweeteners excluding sucrose, glucose, fructose, and isoglucose. The composite flour comprises at least three types of flours, one type of which is corn flour in the amount of 40 to 60 % (w/w) relative to the amount of the composite flour and at least two types of flours are selected from the group represented by buckwheat flour, millet flour, chickpea flour, and rice flour, wherein the buckwheat flour is in the amount of 10 to 30 % (w/w) relative to the amount of the composite flour, the millet flour is in the amount of 10 to 30 % (w/w) relative to the amount of the composite flour, the chickpea flour is in the amount of 10 to 30 % (w/w) relative to the amount of the composite flour, the rice flour is in the amount of 5 to 15 % (w/w) relative to the amount of the composite flour.

The composite flour may also contain, as an additional ingredient, amaranth flour in the amount of 5 to 15 % (w/w) relative to the amount of the composite flour.

The composite flour consists of raw materials that are naturally gluten-free, are neither processed by extraction nor by other techniques and are homogenized for granulation representing pass through of at least 98 % of the amount through sieve with mesh size of 450 µm. The corn flour, the rice flour, the buckwheat flour, the millet flour, the amaranth flour, and the chickpea flour are sources of starch, proteins with varying proportion of protein fractions, and with low proportion of prolamin proteins, source of fats, minerals, vitamins, fibre, and other biologically valuable components.

The edible fat (concentrated fat) and/or the emulsified edible fat can be fat for baking, which provides cohesion for the dough and appropriate texture of the finished product, i.e. the long life pastry. It can be fat with melting point of 30 to 36 °C and fat content of at least 70 % (w/w).

As the milk substitute, buckwheat drink, soya drink, and rice drink or combinations thereof that are based on plant raw materials are all suitable for use. All milk substitutes are in powder form.

The flavouring and seasoning ingredients are substances containing essential oils intended for use in the food industry. They can be vanillin, cinnamon, allspice, cloves, cardamom, anise, coriander, cocoa powder, thyme, etc., as well as combinations thereof. The amounts of added flavouring and seasoning ingredients depend on the amounts of active ingredients - essential oils contained within.

Preparation of the long life pastry according to this invention conveniently uses oilseeds with fat content of at least 30 % and seed sizes determined by passage through sieve with mesh size of 1 mm. Examples of such seeds include chia seeds, poppy seeds.

Applicable sweeteners other than sucrose and natural sweeteners (glucose, fructose, and isoglucose) can be selected from a group polyols and/or low-energy sweeteners. For example, stevia can be used as the sweetener.

Amount of water for preparation of the dough depends on binding capacities of the ingredients and on the desired consistency of the dough, which is related to its shaping process. Water content generally ranges from 3 to 5 % (w/w) relative to the amount of the mixture for preparation of the long life pastry.

The principle of the method of production of the long life pastry according to this invention comprises following steps:
- the composite flour is processed by mixing of the respective components at standard room temperature (20 to 25 °C), thus achieving moderate aeration of components; recommended mixing time is 2 to 4 minutes;
- remaining raw materials according to relevant recipe and water are added to the aerated composite flour; smooth, non-sticky, compact, well formable dough is prepared by kneading to consistency adapted to the method of subsequent processing of the dough;
- the prepared dough is allowed to rest in cold at least 30 minutes at 4 to 10 °C;
- the prepared and mature dough is further shaped, e.g. by plunge cutting out of dough sheet, pressing, piping, cutting (extruding);
- the dough shaped as desired is baked at 135 to 200 °C for 7 to 20 minutes, in preheated oven;
- the baked long life pastry is cooled down.

For shaping of dough by plunge cutting out of dough sheet, the dough sheet is prepared by rolling out to the desired thickness at room temperature, wherein the work surface is dusted by starch obtained from raw materials free of celiac active proteins; the preferred starch grain size for processing purposes is 70 to 150 µm. For other methods of shaping than plunge cutting out of dough sheet, the dough is kneaded, stored in a dough container, followed by pressing, piping, cutting (extruding).

Advantages of this invention stem from the long life pastry meeting the food suitability criteria for individuals suffering from the three disorders combined: celiac disease, lactose intolerance, and diabetes. It is also suitable for lactose intolerant celiac patients, alternatively for celiac patients with diabetes, alternatively also for people suffering from only one of these disorders, thereby covering a wider group of people.

Another advantage is that even with the limited options for raw materials with regard to the assigned use of the long life pastry (naturally free of celiac active fractions of proteins), the selected raw materials for preparation of the long life pastry for specific nutritional purposes provide both required energy value of food and supply of biologically significant components such as fibre, nutritionally valuable proteins, vitamins, minerals, alternatively substances with antioxidant potential and more.

Another advantage is that the pastry is long-lasting and the term of shelf life is adequate to this type of pastry.

Another advantage is that sensory qualities of the long life pastry according to this invention, particularly its taste, aroma, and consistency, are satisfactory.

### Short Descriptions of Drawings

Fig. 1 shows a sensory profile of the long life pastry determined by sensory analysis.
Fig. 2 shows a colour profile of the pastry determined by an instrumental method.
Fig. 3 shows a profile of volatile substances of the long life pastry determined by gas chromatography.

### Examples

### Example 1

The long life pastry according to this invention is prepared by baking dough containing the following components:
- composite flour in the amount of 60 % (w/w),
- emulsified fat in the amount of 24 % (w/w) (here, margarine was specifically used as the fat),
- sweetener in the amount of 8 % (w/w) (here, stevia powder was specifically used as the sweetener),
- milk substitute in the amount of 5.5 % (w/w); here, instant buckwheat drink was specifically used as the milk substitute,
- flavouring and seasoning ingredients; here, ethylvanillin was specifically used in the amount of 0.001 % (w/w),
- oilseeds with fat content at least 30 % and seed size determined by passage through sieve with mesh size of 1 mm, in the amount of 2 % (w/w); here, chia seeds were used,
- lecithin in the amount of 0.499 % (w/w) as the emulsifier,
and water in the amount dependent on binding capacities of the composite flour and other components of the mixture.

The composite flour comprises:
- corn flour in the amount of 50 % (w/w),
- buckwheat flour in the amount of 20 % (w/w),
- millet flour in the amount of 20 % (w/w),
- rice flour in the amount of 10 % (w/w).

The composite flour consists of raw materials that are naturally gluten-free, are neither processed by extraction nor by other techniques and are homogenized for granulation by sieve with mesh size of 450 µm and pass through of at least 98 %.

Method of production of the long life pastry for specific nutritional purposes:
**Step 1**
   The composite flour is processed by mixing of the respective components by methods traditionally used for mixing of loose raw materials at standard room temperature (20 to 25 °C) with mixing time 2 to 4 minutes, thus achieving moderate aeration of components.
**Step 2**
   The dough is processed by adding other raw materials listed in the proposed recipe and water, kneaded to the desired consistency, which depends on the method of shaping, at room temperature (20 to 25 °C) with approximate time of dough processing 10 to 15 minutes. The result is smooth, non-sticky, compact, well formable dough.
**Step 3**
   The dough is allowed to rest for at least 30 minutes in cold at 4 to 10 °C.
**Step 4**
   The dough is shaped by plunge cutting out of the dough sheet. The dough sheet is prepared by rolling out to the desired thickness (5 to 7 mm) at room temperature (20 to 25 °C) for cca 5 to 15 minutes. The work surface is dusted by starch with large grains (70 to 150 µm) obtained from raw materials free of celiac active proteins and thereafter the dough is shaped - by plunge cutting out of the dough sheet.
**Step 5**
   The dough is baked cca 10 minutes at 200 °C in preheated oven.
   Finished products are cooled down (at least 20 minutes at room temperature), then decorated, possibly dipped, and then packaged.

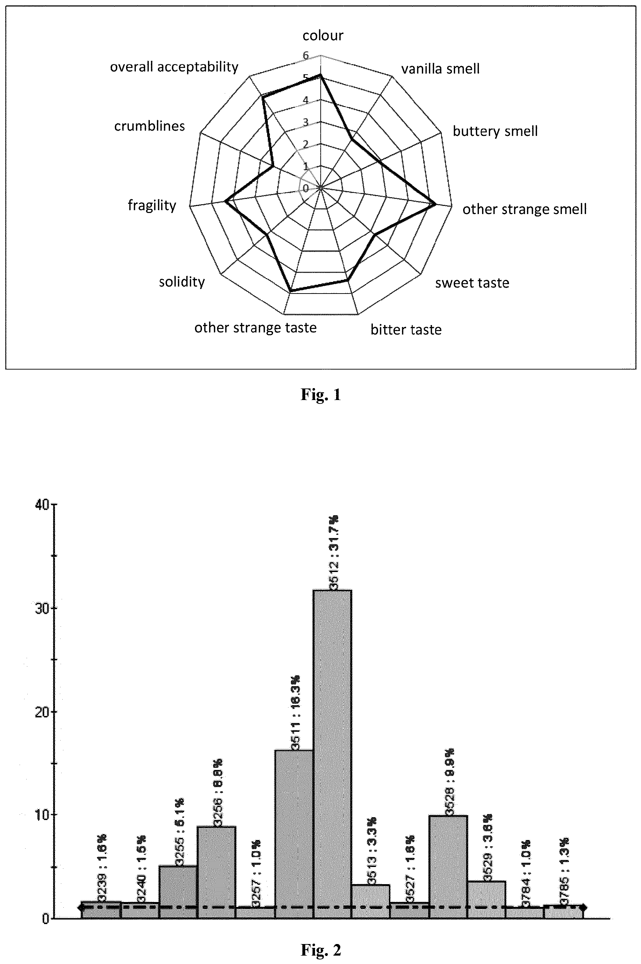

The long life pastry product was submitted for sensory assessment. The sensory assessment of food products included the following important indicators: colour, smell, taste, solidity, and crumbliness. Sensory profile of the long life pastry according to this example of embodiment, including its acceptability, is shown in the Fig. 1. The sensory profile was determined by sensory analysis (panel of assessors). The respective assessment factors are shown on scale from 0 to 6, the overall sensory acceptability of the pastry is 5.
0 is the worst/least intense and 6 is the best/most intense. As shown in the Figure 1, the product is assessed as rather crumbly, with significant intensity of other strange smell.

Assessment of colour profile of the pastry determined by an instrumental method is shown in the Figure 2.

Each colour shade characterizing the product is precisely defined by the colour number and its intensity is expressed in %.

Samples of the long life pastry were analysed by gas chromatography. Detected chromatographic peaks are visualised as LDA (linear discriminant analysis) map. The following odours with indicated retention times were present in the samples:

| | |
|---|---|
| **47.27** | dimethyl sulphoxide (onion, garlic) |
| **38.39** | (Z)-3-Hexanal (green, grass) |
| **75.15** | heptanoic acid (fat, cheese, grease) |
| **89.59** | delta-octalactone (sweet, fruit) |

| | |
|---|---|
| **70.27** | limonene (fruit) |
| **47.35** | (E)-3-Hexanal (green, unripe) |
| **16.50** | ethanol (alcohol, sweet) |
| **99.57** | bis(2-furylmethyl)sulphide (fermentation odour) |

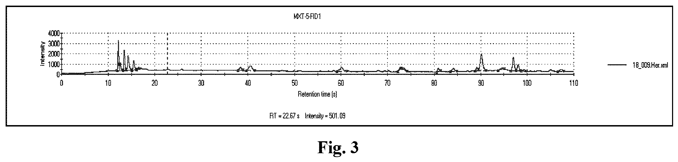

Fig. 3 shows profile of volatile substances of the long life pastry according to the invention determined by gas chromatography, which represents the odour "fingerprint" of the product. Height of peak represents intensity of the odour. The following odours were identified in the pastry: alcohol (ethanol) odour 1, grass odour, so called "green" odour 2, sweet fruity odour 3, and fermentation odour 4.

Basic parameters of the long life pastry are listed in the Table 1

**Table 1**

| Solids, % | Volume, cm³ | Depth, mm | Width, mm | Mass, g |
|---|---|---|---|---|
| 95.44 | 13.780 | 9.8 | 50.2 | 10.40 |

Solidity and crumbliness were characterised by the Texturometer (TA.XT.plus).

Selected components of the long life pastry are listed in Table 2

**Table 2**

| Minerals, % | Proteins, % | Fibre, % | Antioxidant activity, mg TEAC.g⁻¹ | Energy value, J.g⁻¹ |
|---|---|---|---|---|
| 0.649 | 6.83 | 0.53 | 1.53 | 22,119 |

Content of fibre in gluten-free foods is generally low, although the long life pastry according to this example of embodiment had the content of around 0.53 %, which represents more than 20 % of the required fibre intake per day if the cookies are consumed daily in the amount of 100 g (10 pieces).

The long life pastry according to this example of embodiment is acceptable in terms of both sensory and nutritional qualities, complying with requirements for high quality and healthy food products suitable for celiac patients with other restrictions - lactose intolerance and diabetes.

### Example 2

Long life pastry according to this invention is prepared by baking dough made from mixture consisting of the following components:
- composite flour in the amount of 58 % (w/w),
- emulsified fat in the amount of 23.5 % (w/w) (here, margarine was used),
- sweetener in the amount of 11.5 % (w/w) (here, xylitol was used),
- milk substitute in the amount of 4.7 % (w/w) (here, instant buckwheat drink was used),
- flavouring and seasoning ingredients in the amount of 0.3 % (w/w) (here, cinnamon was used),
- oilseeds with fat content of at least 30 % and seed size determined by passage through sieve with mesh size of 1 mm, in the amount of 1.5 % (w/w) (here, poppy seeds were used),
- lecithin in the amount of 0.5 % (w/w) as the emulsifier,
and water in the amount dependent on binding capacities of all components of the mixture.

The composite flour comprises:
- corn flour in the amount of 50 % (w/w),
- buckwheat flour in the amount of 30 % (w/w),
- millet flour in the amount of 15 % (w/w),
- amaranth flour in the amount of 5 % (w/w).
The composite flour consists of raw materials that are naturally gluten-free, are neither processed by extraction nor by other techniques and are homogenized for granulation by sieve with mesh size of 450 µm and pass through of at least 98 %.

Method of production of the long life pastry for specific nutritional purposes:
**Step 1**
   The composite flour is processed by mixing of the respective components by methods traditionally used for mixing of loose raw materials at standard room temperature (20 to 25 °C) with mixing time 2 to 4 minutes, thus achieving moderate aeration of components.
**Step 2**
   The dough is processed by adding other raw materials listed in the proposed recipe and water, kneaded to the desired consistency, which depends on the method of shaping, at room temperature (20 to 25 °C) with approximate time of dough processing 10 to 15 minutes. The result is smooth, non-sticky, compact, well formable dough.
**Step 3**
   The dough is allowed to rest for at least 30 minutes in cold at 4 to 10 °C.
**Step 4**
   The dough is shaped by plunge cutting out of the dough sheet. The dough sheet is prepared by rolling out to the desired thickness (5 to 7 mm), at room temperature (20 to 25 °C for cca 5 to 15 minutes). The work surface is dusted by starch with large grains (70 to 150 µm) obtained from raw materials free of celiac active proteins and thereafter the dough is shaped - by plunge cutting out of the dough sheet.
**Step 5**
   In line with the regulatory measures for reduction of acrylamide, the dough is baked at 135 °C for cca 17 minutes in preheated oven.

Finished products are cooled down (at least 20 minutes at room temperature), then decorated, possibly dipped, and then packaged.

### Example 3

Long life pastry according to this invention is prepared by baking dough made from mixture consisting of the following components:
- composite flour in the amount of 58 % (w/w),
- emulsified fat in the amount of 23.5 % (w/w) (here, margarine was used),
- sweetener in the amount of 11.6 % (w/w) (here, xylitol was used),
- milk substitute in the amount of 4.6 % (w/w) (here, instant buckwheat drink was used),
- flavouring and seasoning ingredients in the amount of 0.2 % (w/w) (here, coriander was used),
- oilseeds with fat content of at least 30 % and seed size determined by passage through sieve with mesh size of 1 mm, in the amount of 1.5 % (w/w) (here, poppy seeds were used),
- lecithin in the amount of 0.6 % (w/w) as the emulsifier,
and water in the amount dependent on binding capacities of all components of the mixture.

The composite flour comprises:
- corn flour in the amount of 50 % (w/w),
- buckwheat flour in the amount of 30 % (w/w),
- chickpea flour in the amount of 20 % (w/w),
The composite flour consists of raw materials that are naturally gluten-free, are neither processed by extraction nor by other techniques and are homogenized for granulation by sieve with mesh side of 450 µm and pass through of at least 98%.

Method of production of the long life pastry for specific nutritional purposes:
**Step 1**
   The composite flour is processed by mixing of the respective components by methods traditionally used for mixing of loose raw materials at standard room temperature (20 to 25 °C) with mixing time 2 to 4 minutes, thus achieving moderate aeration of components .
**Step 2**
   The dough is processed by adding other raw materials listed in the proposed recipe and water, kneaded to the desired consistency, which depends on the method of shaping, at room temperature (20 to 25 °C) with approximate time of dough processing 10 to 15 minutes. The result is smooth, non-sticky, compact, well formable dough.
**Step 3**
   The dough is allowed to rest for at least 30 minutes, in cold at 4 to 10 °C.
**Step 4**
   The dough is shaped by plunge cutting out of the dough sheet. The dough sheet is prepared by rolling out to the desired thickness (5 to 7 mm) at room temperature (20 to 25 °C for cca 5 to 15 minutes). The work surface is dusted by starch with large grains (70 to 150 µm) obtained from raw materials free of celiac active proteins and thereafter the dough is shaped - by plunge cutting out of the dough sheet.
**Step 5**
   In line with the regulatory measures for reduction of acrylamide content, the dough is baked at 135 °C for cca 17 minutes in preheated oven.

Finished products are cooled down (at least 20 minutes at room temperature), then decorated, possibly dipped, and then packaged.

### Example 4

Long life pastry according to this invention is prepared by baking dough comprising of the components as in the Example of embodiment 2 with the following differences in the composite flour:
- corn flour in the amount of 50 % (w/w),
- buckwheat flour in the amount of 25 % (w/w),
- millet flour in the amount of 15 % (w/w),
- rice flour in the amount of 5 % (w/w),
- amaranth flour in the amount of 5 % (w/w).

Method of production of the long life pastry for specific nutritional purposes is identical with the method of production in the Example 2, the only difference being the shaping of dough carried out by pressing.

## Claims

1. Long life pastry for specific nutritional purposes **characterized in that** a dough for preparation thereof is made from a mixture consisting of composite flour in the amount of 56 to 60 % (w/w), edible fat and/or emulsified fat in the amount of 20 to 27 % (w/w), sweetener excluding sucrose, glucose, fructose, and isoglucose in the amount of 0.8 to 12 % (w/w), milk substitute produced from plant raw materials in the amount of 3 to 7 % (w/w), flavouring and seasoning ingredients in the amount of 0.001 to 3 % (w/w), oilseeds in the amount of 1 to 3 % (w/w), lecithin in the amount of 0.5 to 0.7% (w/w), and water in amounts dependent on binding capacities of the composite flour and other components of the mixture, wherein the composite flour comprises at least three types of flours, one type of which is corn flour in the amount of 40 to 60 % (w/w) relative to the amount of the composite flour and at least two types of flours are selected from the group represented by buckwheat flour, millet flour, chickpea flour, and rice flour, wherein buckwheat flour is in the amount of 10 to 30% (w/w) relative to the amount of the composite flour, the millet flour is in the amount of 10 to 30 % (w/w) relative to the amount of the composite flour, the chickpea flour is in the amount of 10 to 30 % (w/w) relative to the amount of the composite flour, the rice flour is in the amount of 5 to 15 % (w/w) relative to the amount of the composite flour.

2. The long life pastry according to claim 1 **characterized in that** the composite flour further contains amaranth flour in the amount of 5 to 15% (w/w) relative to the amount of the composite flour.

3. The long life pastry according to any one of claims 1 and 2 **characterized in that** the components of the composite flour are homogenized for granulation representing pass through of at least of 98 % of the amount through sieve with mesh size of 450 µm.

4. The long life pastry according to any one of claims 1 to 3 **characterized in that** the edible fat and/or the emulsified edible fat is fat for baking with melting point of 30 to 36 °C and fat content of at least 70 % (w/w).

5. The long life pastry according to any one of claims 1 to 4 **characterized in that** the milk substitute based on plant raw materials is buckwheat drink, soya drink, rice drink, or combinations thereof, all in a powder form.

6. The long life pastry according to any one of claims 1 to 5 **characterized in that** the flavouring and seasoning ingredients contain essential oils.

7. The long life pastry according to any one of claims 1 to 6 **characterized in that** the flavouring and seasoning ingredients are vanillin, cinnamon, allspice, clove, cardamom, anise, coriander, thyme, or combinations thereof.

8. The long life pastry according to any one of claims 1 to 7 **characterized in that** the oilseeds have fat content of at least 30 % and seeds sizes determined by passage through sieve with mesh size of 1 mm.

9. The long life pastry according to any one of claims 1 to 8 **characterized in that** the oilseeds are chia seeds, poppy seeds, and the like.

10. The long life pastry according to any one of claims 1 to 9 **characterized in that** the sweetener is from a group of polyols and/or low-energy sweeteners.

11. A method of producing of the long life pastry for specific nutritional purposes made from the dough according to any one of claims 1 to 10 **characterized in that** it comprises following steps:
• the composite flour is processed by mixing of the respective components at standard room temperature thus achieving moderate aeration of components;
• remaining raw materials and water are added to the aerated composite flour; smooth, non-sticky, compact, well-formable dough is prepared by kneading to consistency adapted to the method of subsequent processing of the dough, specifically to shaping;
• the prepared dough is allowed to rest in cold at least 30 minutes at 4 to 10 °C;
• the prepared and mature dough is further shaped;
• the dough shaped as desired is baked at 135 to 200 °C, for 7 to 20 minutes, in preheated oven;
• the baked long life pastry is cooled down.

12. The method of producing long life pastry according to claim 11 **characterized in that** the dough is shaped by plunge cutting out of dough sheet, pressing, piping, cutting, or extruding.

13. The method of producing long life pastry according to any one of claims 11 and 12 **characterized in that** for shaping of the dough by plunge cutting out of a dough sheet, the dough sheet is prepared by rolling out to the desired thickness at room temperature, wherein the work surface is dusted by starch obtained from raw materials free of celiac active proteins.

14. The method of producing long life pastry according to claim 13 **characterized in that** the starch grain size is 70 to 150 µm.

15. The method of producing long life pastry according to any one of claims 12 to 14 **characterized in that** for shaping of the dough by pressing, piping, cutting, or extruding, the dough is kneaded and stored in a dough container.

## Patentansprüche

1. Dauerbackwaren für spezielle Ernährungszwecke **dadurch gekennzeichnet, dass** der Teig für ihre Zubereitung aus einer Mischung hergestellt wird, bestehend aus einem Verbundmehl in einer Menge von 56 bis 60 Gew.-%, aus einem Speisefett und/oder einem emulgierten Fett in einer Menge von 20 bis 27 Gew.-%, aus einem Süßstoff mit Ausnahme von Saccharose, Glucose, Fructose und Isoglucose in einer Menge von 0,8 bis 12 Gew.-%, aus einem Milchersatz auf der Basis von pflanzlichen Rohstoffen in einer Menge von 3 bis 7 Gew.-%, aus Aroma- und Gewürzbestandteile in einer Menge von 0,001 bis 3 Gew.-%, aus Ölsaaten in einer Menge von 1 bis 3 Gew.-%, aus Lecithin in einer Menge von 0,5 bis 0,7 Gew.-% und aus Wasser, dessen Menge von der Bindung des Verbundmehls und anderer Bestandteile der Mischung abhängig ist, wobei das Verbundmehl mindestens drei Mehlsorten enthält, von denen eine Mehlsorte das Maismehl in einer Menge von 40 bis 60 Gew.-%, bezogen auf die Menge des Verbundmehls, ist und die mindestens zwei Mehlsorten aus der Gruppe von Buchweizen-, Flattergras-, Kichererbsen- und Reismehl ausgewählt werden, wobei das Buchweizenmehl in einer Menge von 10 bis 30 Gew.-%, bezogen auf die Menge des Verbundmehls, ist, das Flattergrasmehl in einer Menge von 10 bis 30 Gew.-%, bezogen auf die Menge des Verbundmehls, ist, das Kichererbsenmehl in einer Menge von 10 bis 30 Gew.-%, bezogen auf die Menge des Verbundmehls, ist, das Reismehl in einer Menge von 5 bis 15 Gew.-%, bezogen auf die Menge des Verbundmehls, ist.

2. Dauerbackwaren nach dem Anspruch 1 **dadurch gekennzeichnet, dass** das Verbundmehl weiter das Amaranthmehl in einer Menge von 5 bis 15 Gew.-%, bezogen auf die Menge des Verbundmehls, enthält.

3. Dauerbackwaren nach einem der Ansprüche 1 und 2 **dadurch gekennzeichnet, dass** die Bestandteile des Verbundmehls zur Granulierung durch ein Sieb mit einer Maschengröße von 450 µm und mit einem Siebdurchgang von mindestens 98 % homogenisiert werden.

4. Dauerbackwaren nach einem der Ansprüche 1 bis 3 **dadurch gekennzeichnet, dass** das Speisefett und/oder das emulgierte Fett ein Backfett mit einem Schmelzpunkt von 30 bis 36 °C ist und einen Mindestfettgehalt von 70 Gew.-% hat.

5. Dauerbackwaren nach einem der Ansprüche 1 bis 4 **dadurch gekennzeichnet, dass** der Milchersatz auf der Basis von pflanzlichen Rohstoffen ein Buchweizengetränk, ein Sojagetränk, ein Reisgetränk und Kombinationen davon ist, alle in Pulverform.

6. Dauerbackwaren nach einem der Ansprüche 1 bis 5 **dadurch gekennzeichnet, dass** Aroma- und Gewürzbestandteile ätherische Öle enthalten.

7. Dauerbackwaren nach einem der Ansprüche 1 bis 6 **dadurch gekennzeichnet, dass** Aroma- und Gewürzbestandteile Vanillin, Zimt, Neugewürz, Nelken, Kardamom, Anis, Koriander, Thymian und Kombinationen davon sind.

8. Dauerbackwaren nach einem der Ansprüche 1 bis 7 **dadurch gekennzeichnet, dass** die Ölsaaten einen Fettgehalt von mindestens 30 % aufweisen und die Korngröße als Durchgang durch ein Sieb mit einer Maschengröße von 1 mm bestimmt wird.

9. Dauerbackwaren nach einem der Ansprüche 1 bis 8 **dadurch gekennzeichnet, dass** die Ölsaaten Chiasamen, Mohn und dergleichen sind.

10. Dauerbackwaren nach einem der Ansprüche 1 bis 9 **dadurch gekennzeichnet, dass** der Süßstoff aus der Gruppe der Polyole und/oder der Niedrigenergie-Süßstoffe ist.

11. Verfahren zur Herstellung der Dauerbackwaren für spezielle Ernährungszwecke, hergestellt aus einem Teig nach einem der Ansprüche 1 bis 10 **dadurch gekennzeichnet, dass** es die folgenden Schritte umfasst:
• es wird das Verbundmehl durch die Vermischung der einzelnen Komponenten bei gewöhnlicher Raumtemperatur verarbeitet, um eine leichte Belüftung der Komponenten zu erreichen;
• dem belüfteten Verbundmehl werden andere Rohstoffe und Wasser zugegeben, und durch Kneten davon wird ein glatter, nicht klebriger, kompakter, gut formbarer Teig mit einer Konsistenz hergestellt, an das Verfahren der Weiterverarbeitung des Teigs angepasst ist, und zwar an das Formen;
• der ausarbeitete Teig wird mindestens 30 Minuten in der Kälte bei einer Temperatur von 4 bis 10 °C ruhen gelassen;
• der ausarbeitete und ausgeruhte Teig wird weiter geformt;
• der in die gewünschte Form geformte Teig wird bei einer Temperatur von 135 bis 200 °C während 7 bis 20 Minuten in einem vorgeheizten Ofen gebacken.
• gebackene Dauerbackwaren werden abgekühlt.

12. Verfahren zur Herstellung der Dauerbackwaren nach dem Anspruch 11 **dadurch gekennzeichnet, dass** der Teig durch Ausstechen aus dem Teigsraum, durch Pressen, Spritzen, Schneiden oder Extrudieren geformt wird.

13. Verfahren zur Herstellung der Dauerbackwaren nach einem der Ansprüche 11 und 12 **dadurch gekennzeichnet, dass** beim Formen des Teigs durch Ausstechen aus dem der Teigsaum durch Ausrollen auf die gewünschte Dicke bei Raumtemperatur gebildet wird, wobei die Arbeitsfläche mit Stärke bestäubt wird, die aus Rohstoffen stammt, die frei von zöliakieaktiven Proteinen sind.

14. Verfahren zur Herstellung der Dauerbackwaren nach dem Anspruch 13 **dadurch gekennzeichnet, dass** die Stärke eine Korngröße von 70 bis 150 µm aufweist.

15. Verfahren zur Herstellung der Dauerbackwaren nach einem der Ansprüche 12 bis 14 **dadurch gekennzeichnet, dass** der Teig beim Formen durch Pressen, Spritzen, Schneiden oder Extrudieren geknetet wird und in einem Teigbehälter gelagert wird.

## Revendications

1. Pain longue conservation à des fins nutritionnelles spéciales **caractérisés en ce que** la pâte pour sa préparation est composée d'un mélange constitué de farine composite en une quantité de 56 à 60 % en poids, de graisse alimentaire et/ou émulsionnée en une quantité de 20 à 27 % en poids, d'un édulcorant à l'exception du saccharose, du glucose, du fructose et de l'isoglucose en une quantité de 0,8 à 12 % en poids, d'un substitut de lait à base de matières premières végétales en une quantité de 3 à 7 % en poids, d'ingrédients aromatisants et d'assaisonnement en une quantité de 0,001 à 3 %, de graines oléagineuses en une quantité de 1 à 3 % en poids, de la lécithine en une quantité de 0,5 à 0,7 % en poids et d'eau, dont la quantité dépend de la liaison de la farine composite et d'autres composants du mélange, la farine composite comprenant au moins trois types de farine dont l'un est de la farine de maïs en une quantité de 40 à 60 % en poids par rapport à la quantité de la farine composite et au moins deux types de farine sont choisis dans le groupe de farine de sarrasin, de blé, de pois chiche et de riz, la farine de sarrasin étant en une quantité de 10 à 30 % en poids par rapport à la quantité de la farine composite, la farine de blé étant en une quantité de 10 à 30 % en poids par rapport à la quantité de la farine composite, la farine de pois chiche étant en une quantité de 10 à 30 % en poids par rapport à la quantité de la farine composite, la farine de riz étant en une quantité de 5 à 15 % en poids par rapport à la quantité de la farine composite.

2. Pain longue conservation selon la revendication 1, **caractérisés en ce que** la farine composite contient en outre de la farine d'amarante en une quantité de 5 à 15 % en poids par rapport à la quantité de la farine composite.

3. Pain longue conservation selon l'une quelconque des revendications 1 ou 2, **caractérisés en ce que** les composants de la farine composite sont homogénéisés pour obtenir la granulation avec un tamis de maille de 450 µm et un taux de passage dans le tamis d'au moins 98 %.

4. Pain longue conservation selon l'une quelconque des revendications 1 à 3, **caractérisés en ce que** la graisse alimentaire et/ou émulsionnée est une graisse pour cuisson ayant son point de fusion de 30 à 36 °C et une teneur minimale en matière grasse de 70 % en poids.

5. Pain longue conservation selon l'une quelconque des revendications 1 à 4, **caractérisés en ce que** le substitut de lait à base de matières premières végétales est une boisson de sarrasin, une boisson de soja, une boisson de riz et leurs combinaisons, le tout en poudre.

6. Pain longue conservation selon l'une quelconque des revendications 1 à 5, **caractérisés en ce que** les ingrédients aromatisants et d'assaisonnement contiennent les huiles essentielles.

7. Pain longue conservation selon l'une quelconque des revendications 1 à 6, **caractérisés en ce que** les ingrédients aromatisants et d'assaisonnement sont : vanilline, cannelle, piment de Jamaïque, clou de girofle, cardamome, anis, coriandre, thym et leurs combinaisons.

8. Pain longue conservation selon l'une quelconque des revendications 1 à 7, **caractérisés en ce que** les graines oléagineuses ont une teneur en matière grasse d'au moins 30 % et la granulométrie est déterminée par passage à travers un tamis de maille de 1 mm.

9. Pain longue conservation selon l'une quelconque des revendications 1 à 8, **caractérisés en ce que** les graines oléagineuses sont les graines de chia, de pavot et similaires.

10. Pain longue conservation selon l'une quelconque des revendications 1 à 9, **caractérisés en ce que** l'édulcorant appartient au groupe des polyols et/ou des édulcorants à faible énergie.

11. Procédé de fabrication d'un pain longue conservation à des fins nutritionnelles spéciales fabriqué en pâte selon l'une quelconque des revendications 1 à 10, **caractérisé en ce qu'**il comprend les étapes suivantes:
• la farine composite est traitée en mélangeant les différents composants à température ambiante standard pour obtenir une légère aération des composants ;
• d'autres matières premières et de l'eau sont ajoutées à la farine composite aérée, et en les mélangeant, on obtient une pâte lisse, non collante, compacte et facile à façonner, d'une consistance adaptée au mode de traitement ultérieur de la pâte, à savoir la mise en forme ;
• la pâte préparée est laissée reposer au moins 30 minutes au frais à une température de 4 à 10 °C ;
• la pâte préparée et reposée est ensuite mise en forme ;
• la pâte formée à la forme souhaitée est cuite à une température de 135 à 200 °C, pendant 7 à 20 minutes dans un four préchauffé.
• le pain longue conservation cuit au four est refroidi.

12. Procédé de fabrication du pain longue conservation selon la revendication 11, **caractérisé en ce que** la pâte est formée par découpage à partir d'un ourlet de pâte, par pressage, pulvérisation, découpe ou extrusion.

13. Procédé de fabrication du pain longue conservation selon l'une quelconque des revendications 11 et 12, **caractérisé en ce que** lors de la mise en forme de la pâte par découpage à partir de l'ourlet de pâte, l'ourlet de pâte est formé en enroulant la pâte à l'épaisseur souhaitée à température ambiante, le plan de travail étant saupoudré par de l'amidon dont l'origine provient de matières premières sans protéines activant la maladie cœliaque.

14. Procédé de fabrication du pain longue conservation selon la revendication 13, **caractérisé en ce que** l'amidon a une granulométrie de 70 à 150 µm.

15. Procédé de fabrication du pain longue conservation selon l'une quelconque des revendications 12 à 14, **caractérisé en ce que** lors de la mise en forme de la pâte par pressage, pulvérisation, découpe ou extrusion, la pâte est mélangée et stockée dans un réservoir à pâte.
